(19) **Europäisches Patentamt**
**European Patent Office**
**Office européen des brevets**

(11) **EP 2 831 660 B1**

(12) **EUROPÄISCHE PATENTSCHRIFT**

(45) Veröffentlichungstag und Bekanntmachung des Hinweises auf die Patenterteilung:
**10.05.2023  Patentblatt 2023/19**

(21) Anmeldenummer: **13712805.4**

(22) Anmeldetag: **28.03.2013**

(51) Internationale Patentklassifikation (IPC):
**G02B 27/01** *(2006.01)*

(52) Gemeinsame Patentklassifikation (CPC):
**G02B 27/0172; G02B 2027/011; G02B 2027/015; G02B 2027/0152**

(86) Internationale Anmeldenummer:
**PCT/EP2013/056749**

(87) Internationale Veröffentlichungsnummer:
**WO 2013/144311 (03.10.2013 Gazette 2013/40)**

(54) **PROJEKTIONSDISPLAY UND VERFAHREN ZUM PROJIZIEREN EINES GESAMTBILDES**

PROJECTION DISPLAY AND METHOD FOR PROJECTING AN OVERALL IMAGE

ÉCRAN DE PROJECTION ET PROCÉDÉ DE PROJECTION D'UNE IMAGE COMPLÈTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2012  DE 102012205164**

(43) Veröffentlichungstag der Anmeldung:
**04.02.2015  Patentblatt 2015/06**

(73) Patentinhaber: **Fraunhofer-Gesellschaft zur Förderung
der angewandten Forschung e.V.
80686 München (DE)**

(72) Erfinder:
• **SCHREIBER, Peter
07749 Jena (DE)**
• **SIELER, Marcel
07745 Jena (DE)**

• **KRAUS, Matthias
07745 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**WO-A1-2011/157632      US-A1- 2009 153 960
US-A1- 2009 315 887      US-B1- 6 611 241**

• **RUSSELL M. KURTZ: "Image tiling for a high-resolution helmet-mounted display", PROCEEDINGS OF SPIE, Bd. 5800, 1. Januar 2005 (2005-01-01), Seiten 130-137, XP055017051, ISSN: 0277-786X, DOI: 10.1117/12.604157**

**EP 2 831 660 B1**

## Beschreibung

Ausführungsbeispiele der vorliegenden Erfindung beziehen sich auf ein Projektionsdisplay und ein Verfahren zum Projizieren eines Gesamtbildes. Weitere Ausführungsbeispiele der vorliegenden Erfindung beziehen sich auf ein Projektionsdisplay für virtuelle Bilder mit Mehrkanaloptik.

Head-Mounted Displays (HMD, kopfbefestigte Displays) werden üblicherweise mit einem Mikrodisplay, wie z.B. einem LCD-(Liquid Crystal Display, Flüssigkristallbildschirm), LCoS-(Liquid Crystal on Silicon, Flüssigkristalle auf Silizium) oder OLED-(Organic Light Emitting Diode, organische Leuchtdiode) basierten Mikrodisplay, in Verbindung mit einer Okularoptik, die das Mikrodisplay in einen zur Betrachtung geeigneten Abstand zwischen der deutlichen Sehweite und Unendlich abbildet, realisiert. Die Brennweite des Okulars $f_{Ok}$ bestimmt dabei zusammen mit der Diagonalen D des Mikrodisplays das Gesichtsfeld (Field of View, FOV) des Head-Mounted Displays:

$$FOV = 2\operatorname{atan}\frac{D}{2f_{Ok}} \qquad (1)$$

Um übliche Gesichtsfelder von Head-Mounted Displays im Bereich zwischen 40° und 60° mit verfügbaren Mikroimagern bzw. Mikro-Bildgebern mit typischen Schirmdiagonalen von 2/3" zu erzielen, benötigt man somit Okularbrennweiten im Bereich zwischen 15 und 23 mm. Der Pupillendurchmesser des Okulars $D_{Pupille}$ bestimmt dabei die Größe des Bereichs, in dem sich das Auge des Betrachters bewegen darf (Eye Motion Box, EMB). Die Pupillengröße bzw. EMB erhält man aus dem Verhältnis von Brennweite $f_{Ok}$ und Blendenzahl f/# des Okulars:

$$EMB = D_{Pupille} = \frac{f_{Ok}}{f/\#} \qquad (2)$$

Für typische Blendenzahlen im Bereich von ca. f/2,8 erhält man daraus eine EMB von größenordnungsmäßig 5 bis 8 mm. Hier zeigen sich zwei Hauptschwierigkeiten. Zum einen bedingt die vergleichsweise große, erforderliche Okularbrennweite große Systemabmaße, was den Tragekomfort des Head-Mounted Displays verschlechtert. Zum anderen erschwert die für eine große EMB erforderliche geringe Blendenzahl zusammen mit dem großen FOV die Korrektur von Abbildungsfehlern, was die Komplexität (und damit die Größe und Masse) der Okularoptik weiter vergrößert.

Um die Baugröße der Optik bei gegebener Brennweite zu verringern, werden im Stand der Technik beispielsweise mehrfach gefaltete Strahlengänge, wie z.B. beim "Canon Video see-through"-System wie in (A. Takagi, S. Yamazaki, Y. Saito, und N. Taniguchi, "Development of a stereo video see-through HMD for AT systems," in Int. Symp. On Augmented Reality, Munich, Germany, Oct. 5-6 2000), oder eine Verlagerung der Okularoptik in Richtung des Brillenbügels mit anschließendem Bildleiter zur Einspiegelung in das Auge wie in (Ichiro Kasai Yasushi, Yasushi Tanijiri, Takeshi Endo, Hiroaki Ueda, "A Forgettable Near Eye Display", Proc. 4th Int. Symp. on Wearable Computers, ISWC 2000, Atlanta) genutzt. Hauptnachteile dieser bekannten Optikschemata sind die resultierenden vergleichsweise großen Systemabmessungen und -massen sowie die gemäß dem Stand der Technik zur Aberrationskorrektur erforderlichen komplizierten Freiformoptiken wie in (A. Takagi, S. Yamazaki, Y. Saito, und N. Taniguchi, "Development of a stereo video see-through HMD for AT systems," in Int. Symp. On Augmented Reality, Munich, Germany, Oct. 5-6 2000) bzw. herstellungstechnisch aufwendigen Bildleiterelemente wie in (Ichiro Kasai Yasushi, Yasushi Tanijiri, Takeshi Endo, Hiroaki Ueda, "A Forgettable Near Eye Display", Proc. 4th Int. Symp. on Wearable Computers, ISWC 2000, Atlanta).

Ein im Stand der Technik beschriebener alternativer optischer Ansatz nutzt eine Linsenarray-(Linsenraster) Optik, wobei jeweils einem Pixel eines Mikroimagers bzw. Mikro-Bildgebers ein Lenslet (Linsenelement) zugeordnet ist, wie es in der US 5,499,138, der US 5,561,538, der US 6,816,313 B2 und der US 2008/020473 A1 beschrieben ist. Dieses bekannte alternative Optikschema verspricht zwar eine sehr geringe Baulänge der Optik, erlaubt aber nur kleine darstellbare Pixelzahlen und eine sehr geringe Transmission, was eine geringe Bildhelligkeit und eine kurze Batterielaufzeit bei netzunabhängigen Geräten bedeutet.

Ein weiterer bekannter Ansatz ist die Nutzung eines Arrayprojektors bzw. Rasterprojektors, wie es in der WO 2010/145784 A1 beschrieben ist. Hier ist schon eine deutlich größere Bildhelligkeit als mit den in der US 5,499,138, der US 5,561,538, der US 6,816,313 B2 und der US 2008/020473 A1 beschriebenen Arrayoptiken bzw. Rasteroptiken erreichbar. Der bekannte, auf einer Mehrkanalprojektion basierende Arrayprojektor hat jedoch den Nachteil, dass die darstellbare Pixelzahl dennoch hinter den Einkanaloptiken wie in (A. Takagi, S. Yamazaki, Y. Saito, und N. Taniguchi, "Development of a stereo video see-through HMD for AT systems," in Int. Symp. On Augmented Reality, Munich, Germany, Oct. 5-6 2000) und (Ichiro Kasai Yasushi, Yasushi Tanijiri, Takeshi Endo, Hiroaki Ueda, "A Forgettable Near Eye Display", Proc. 4th Int. Symp. on Wearable Computers, ISWC 2000, Atlanta) zurückbleibt.

Die US 6,611,241 B1 beschreibt große optische Anzeigen umfassend eine Anordnung von kleineren Anzeigevorrichtungen oder -Modulen, von denen jede einen Teil des anzuzeigenden Bildes anzeigt, so dass die Anordnung von kleineren Anzeigevorrichtungen zusammen das vollständige Bild anzeigt. Die Anzeigevorrichtung kann Anzeigeelemente verwenden, die keine schmalen Kanten haben und die nicht zusammenhängend sind, um überlappende Teilbilder zu erzeugen. Bildpixel, die ansonsten "Nahtstellen" oder Lücken sind, werden von den Bilddaten erzeugt und in der richtigen Position und Helligkeit in dem angezeigten Bild angezeigt, wie beispielsweise in den Überlappbereichen der überlappenden Teilbilder.

Die WO 2011/157632 A1 beschreibt ein Projektionsdisplay mit mindestens einer Lichtquelle, mindestens einem reflektiven Bildgeber, der ausgebildet ist, um in einer zweidimensionalen Verteilung von Teilbereichen desselben Einzelbilder darzustellen, einer Projektionsoptikanordnung mit einer zweidimensionalen Anordnung von Projektionsoptiken, die konfiguriert ist, um einen zugeordneten Teilbereich des mindestens einen Bildgebers jeweils auf eine Bildebene abzubilden, so dass sich Abbildungen der Einzelbilder in der Bildebene zu einem Gesamtbild überlagern, und mindestens einem Strahlteiler, der in einem Strahlengang zwischen dem mindestens einen reflektiven Bildgeber und der zweidimensionalen Anordnung von Projektionsoptiken einerseits und im Strahlengang zwischen der mindestens einen Lichtquelle und dem mindestens einen reflektiven Bildgeber andererseits angeordnet ist.

Die US 5 499 138 A beschreibt eine Bildanzeigevorrichtung, wie beispielsweise eine Bildanzeigevorrichtung vom Brillentyp, die in der Lage ist, ein hochauflösendes Bild durch Projizieren von Pixeln bei einem richtigen Pitch auf der Netzhaut in dem Auge des Benutzers zu reproduzieren. Die Bildanzeigevorrichtung umfasst eine Mikrolinsenanordnung. Anstelle der Mikrolinsenanordnung kann auch eine Fresnel-Zonenplatteanordnung verwendet werden.

Ein Nachteil des in der US 5 499 138 A beschriebenen Projektionssystems ist die Zuordnung von jeweils nur einem (einzigen) Displaypixel (z.B. sehr kleiner LED-Chip oder LCD-Pixel) zu je einer Mikrolinse. Somit führt dieser bekannte Ansatz zu einer geringen darstellbaren Pixelzahl bei gleichzeitig großen lateralen Optikabmessungen.

Ein generelles Problem ist somit, dass im bekannten Stand der Technik kein Konzept existiert, welches eine Mehrkanalprojektion bei einer größeren Zahl darstellbarer Pixel mit einer geringen Baulänge eines Projektionsdisplays vereint.

Die Aufgabe der vorliegenden Erfindung besteht daher darin, ein Konzept zu schaffen, welches eine Mehrkanalprojektion mit einer größeren Zahl darstellbarer Pixel und gleichzeitig eine geringere Baulänge des Projektionsdisplays ermöglicht.

Diese Aufgabe wird durch ein Projektionsdisplay nach Anspruch 1 und ein Verfahren nach Anspruch 14 gelöst.

Ausführungsbeispiele der vorliegenden Erfindung schaffen ein Projektionsdisplay zur Projektion virtueller Bilder in einem Head-Mounted-Display mit einem Bildgeber zum Darstellen von Teilbildern in einer zweidimensionalen Verteilung von Teilbereichen des Bildgebers und einer zur Positionierung in Augennähe vorgesehenen Projektionsoptikanordnung mit einer zweidimensionalen Verteilung von Projektionsoptiken. Die Projektionsoptikanordnung ist konfiguriert, um Projektionen der Teilbilder in einer Bildebene zu einem Gesamtbild so zu überlagern, dass paarweise eine gegenseitige flächenmäßige Überlappung der Projektionen der Teilbilder in der Bildebene resultiert, die für alle Paare zwischen 0,1 und 0,8 liegt, wobei eine vollständige Überlappung durch eine 1 und keine durch eine 0 beschrieben wird. Hierbei ist das Projektionsdisplay so ausgelegt, dass das Gesamtbild ein virtuelles Gesamtbild ist. Ferner weist das Projektionsdisplay einen "Eye-tracking"-Sensor auf und der Bildgeber ist ausgelegt, um alle Teilbilder gleichmäßig in Richtung einer lateralen Ausdehnung der zweidimensionalen Verteilung der Teilbereiche des Bildgebers zu verschieben, wobei die gleichmäßige Verschiebung der Teilbilder abhängig von einer von dem "Eye-tracking"-Sensor gemessenen Lage eines Augapfels eines Benutzers bezüglich einer optischen Achse der Projektionsoptikanordnung einstellbar ist.

Die oben genannte größere Zahl darstellbarer Pixel der Mehrkanalprojektion kann bei einer gleichzeitig geringeren Baulänge des Projektionsdisplays erreicht werden, wenn Teilbilder mit einem Bildgeber in einer zweidimensionalen Verteilung von Teilbereichen des Bildgebers dargestellt werden und wenn Projektionen der Teilbilder durch eine Projektionsoptikanordnung mit einer zweidimensionalen Verteilung von Projektionsoptiken in einer Bildebene zur einem Gesamtbild derart überlagert werden, dass paarweise eine gegenseitige flächenmäßige Überlappung der Projektionen der Teilbilder in der Bildebene resultiert, die für alle Paare zwischen 0,1 und 0,8 liegt, wobei das Projektionsdisplay so ausgelegt ist, dass das Gesamtbild ein virtuelles Gesamtbild ist. Somit kann einerseits die größere Zahl darstellbarer Pixel (bzw. die höhere Bildqualität) der Mehrkanalprojektion erreicht werden, und andererseits kann gleichzeitig die geringere Baulänge des Projektionsdisplays realisiert werden. Hierbei kann von einer Darstellung von Teilbildern Gebrauch gemacht und eine spezielle Überlagerung von Projektionen der Teilbilder in einer Bildebene zu einem (virtuellen) Gesamtbild verwendet werden. Dadurch, dass der Bildgeber ausgelegt ist, um eine gleichmäßige Verschiebung der Teilbilder abhängig von einer von dem "Eye-tracking"-Sensor gemessenen Lage eines Augapfels zu bewerkstelligen, kann eine Kompensation einer Dezentrierung des Augapfels des Benutzers bezüglich der optischen Achse der Projektionsoptikanordnung erreicht werden. Durch die Kompensation dieser Dezentrierung kann eine Wahrnehmung von Geisterbildern unterdrückt oder vermieden werden.

Bei Ausführungsbeispielen der vorliegenden Erfindung weist die Projektionsoptikanordnung ferner eine Feldlinse auf, die in Projektionsrichtung der zweidimensionalen Verteilung der Projektionsoptiken nachgeschaltet ist, um die Projektionen der Teilbilder in eine Pupille eines Benutzers des Projektionsdisplays zu lenken. Somit kann die Bildebene eine virtuelle Bildebene sein, zwischen der und der Feldlinse der Bildgeber und die zweidimensionale Verteilung der Projektionsoptiken angeordnet sind.

Bei Ausführungsbeispielen der vorliegenden Erfindung ist der Bildgeber ausgelegt, um jedes der Teilbilder mit einer Bildhelligkeit darzustellen, die kontinuierlich zum Rand des Teilbildes hin abfällt. Somit können Artefakte in einem Überlappungsbereich der Projektionen in der Bildebene unterdrückt oder vermieden werden.

Ausführungsbeispiele der vorliegenden Erfindung werden nachfolgend Bezug nehmend auf die beiliegenden Figuren, in denen gleiche oder gleichwirkende Elemente mit gleichen Bezugszeichen bezeichnet sind, näher erläutert. Es zeigen:

Fig. 1a    eine Seitenansicht eines Projektionsdisplays gemäß einem Ausführungsbeispiel der vorliegenden Erfindung;

Fig. 1b    eine schematische Darstellung zur Veranschaulichung einer erfindungsgemäßen gegenseitigen flächenmäßigen Überlappung von Projektionen von Teilbildern in einer Bildebene;

Fig. 2a    eine schematische Darstellung zur Veranschaulichung eines erfindungsgemäßen Gesamtbildes in der Bildebene;

Fig. 2b    eine schematische Darstellung zur Veranschaulichung von Teilbildern in einer zweidimensionalen Verteilung von Teilbereichen eines Bildgebers gemäß einem Ausführungsbeispiel der vorliegenden Erfindung;

Fig. 3    eine schematische Darstellung zur Veranschaulichung von Teilbildern in einer zweidimensionalen Verteilung von Teilbereichen eines Bildgebers gemäß einem Ausführungsbeispiel der vorliegenden Erfindung;

Fig. 4    eine Seitenansicht einer zweidimensionalen Verteilung von Projektionsoptiken gemäß einem Ausführungsbeispiel der vorliegenden Erfindung;

Fig. 5a, b    Draufsichten auf Bildgeber zur Darstellung von Verschiebungen von Teilbildern; und

Fig. 6a, b    schematische Darstellungen von einem Strahlengang und einer Zerlegung des FOV zur Herleitung einer erfindungsgemäßen Gleichung für eine darstellbare Gesamtpixelzahl.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in verschiedenen Ausführungsbeispielen auf einander anwendbar.

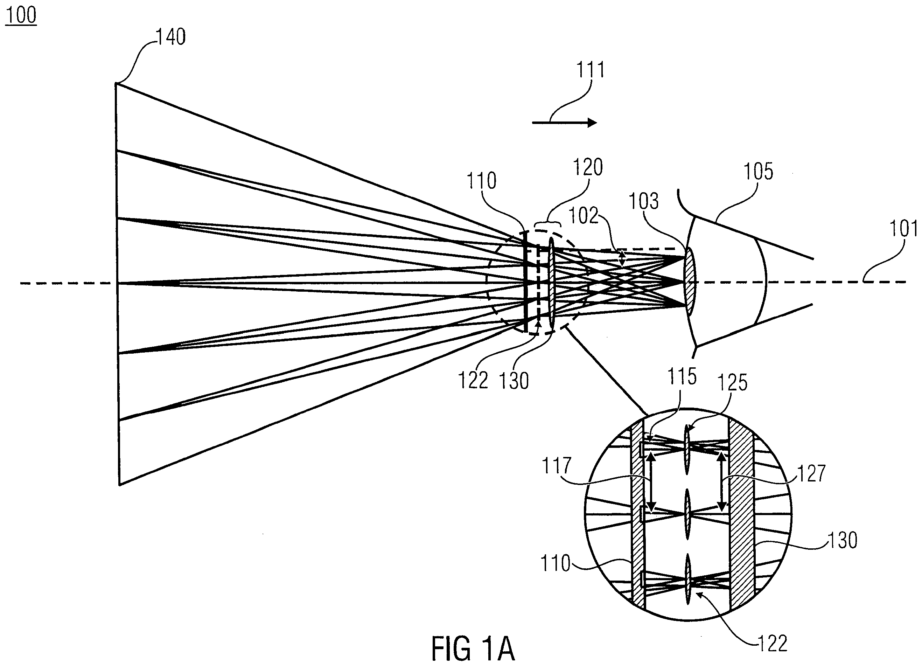

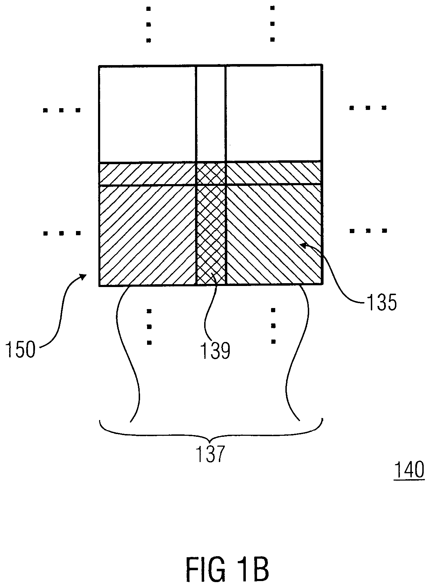

Fig. 1a zeigt eine Seitenansicht eines Projektionsdisplays 100 gemäß einem Ausführungsbeispiel der vorliegenden Erfindung. Wie in Fig. 1a gezeigt, weist das Projektionsdisplay 100 einen Bildgeber 110 zum Darstellen von Teilbildern in einer zweidimensionalen Verteilung von Teilbereichen 115 des Bildgebers 110 auf. Ferner weist das in Fig. 1a gezeigte Projektionsdisplay 100 eine Projektionsoptikanordnung 120 mit einer zweidimensionalen Verteilung 122 von Projektionsoptiken 125 auf. Fig. 1b zeigt eine schematische Darstellung zur Veranschaulichung einer erfindungsgemäßen gegenseitigen flächenmäßigen Überlappung von Projektionen von Teilbildern in einer Bildebene. In Bezug auf Fig. 1a und 1b ist die Projektionsoptikanordnung 120 des Projektionsdisplays 100 konfiguriert, um Projektionen 135 der Teilbilder in einer Bildebene 140 zu einem Gesamtbild 150 so zu überlagern, dass paarweise eine gegenseitige flächenmäßige Überlappung 139 der Projektionen 135 der Teilbilder in der Bildebene 140 resultiert, die für alle Paare 137 zwischen 0,1 und 0,8 liegt. Hierbei ist das Projektionsdisplay 100 so ausgelegt, dass das Gesamtbild 150 ein virtuelles Gesamtbild ist. Durch das Bereitstellen der für alle Paare zwischen 0,1 und 0,8 liegenden gegenseitigen flächenmäßigen Überlappung kann eine Mehrkanalprojektion mit einer höheren Bildqualität bei einer gleichzeitig geringeren Baulänge des Projektionsdisplays erreicht werden.

Das Projektionsdisplay 100 ist so ausgelegt, dass das Gesamtbild 150 ein virtuelles Gesamtbild ist und dafür kein (Projektions-)Schirm benötigt wird.

Die Paare 137 werden durch die sich paarweise überlappenden Projektionen 135 gebildet und dieselben (und zwar alle von denselben) weisen eine gegenseitige flächenmäßige Überlappung 139 auf, die zwischen 0,1 und 0,8 liegt. Hierzu wird auch auf die Fig. 1b verwiesen, in der gezeigt ist, dass sich alle (zueinander benachbarten) Paare 137 in der Bildebene 140 überlappen.

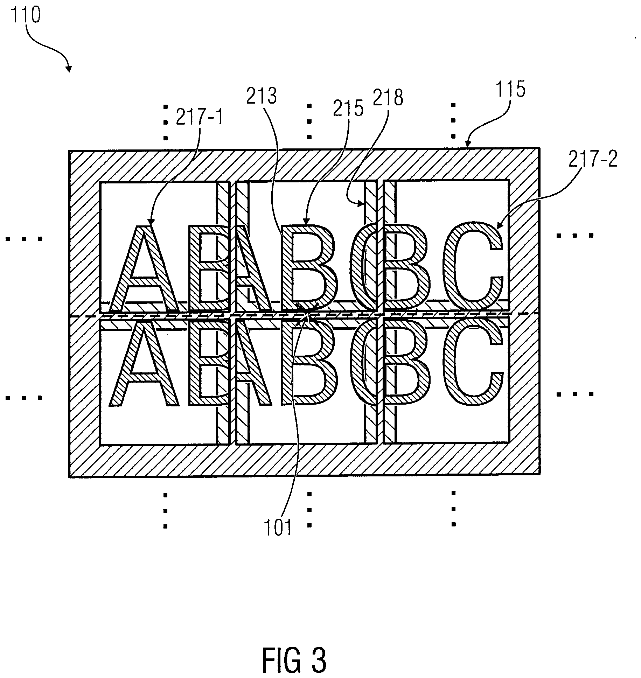

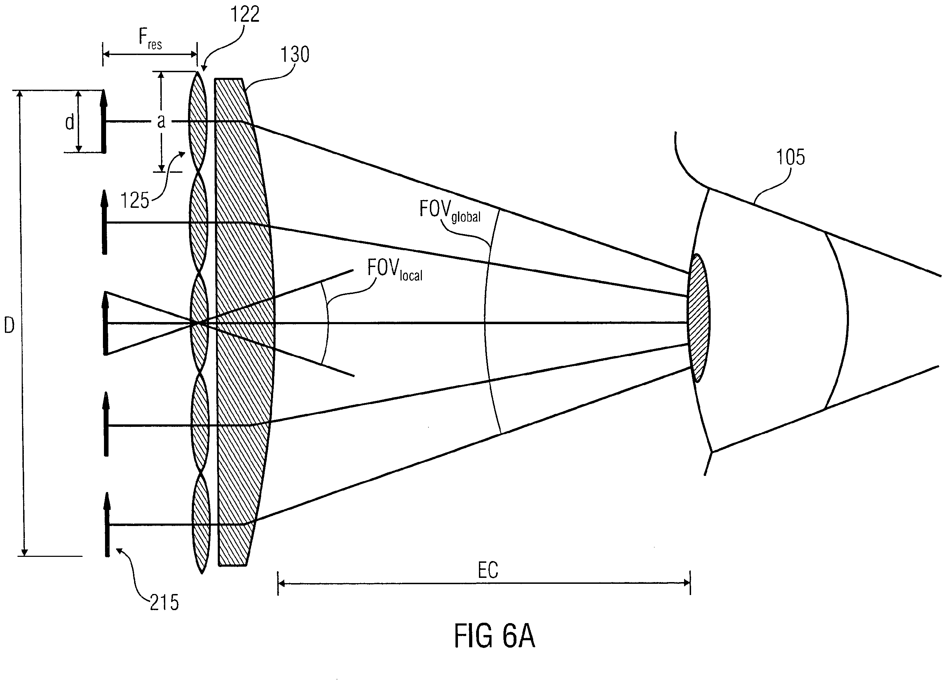

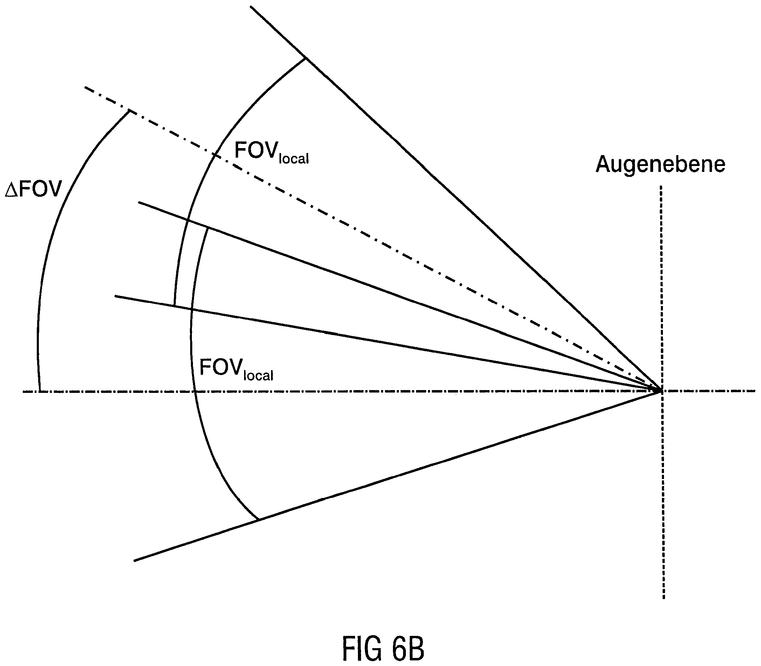

Ferner wird noch auf Fig. 6a und 6b verwiesen, anhand derer die Überlappung der von benachbarten Projektionsoptiken 125 (bzw. Mikrolinsen) projizierten Teile des Gesichtsfelds (bzw. des FOV) im Winkelraum beschrieben wird. Bei Ausführungsbeispielen ist es möglich, dass nicht nur direkt benachbarte, sondern auch "übernächste" Nachbarn (bzw. Projektionen 135 von Projektionsoptiken 125, die in der zweidimensionalen Verteilung 122 nicht unmittelbar nebeneinander angeordnet sind) überlappen. Dies ist auch bei der Projektion des Buchstabens "B" in Fig. 3 beispielhaft verdeutlicht.

Somit ist es bei Ausführungsbeispielen möglich, dass auch eine Überlappung (bzw. "Paarung") von übernächsten oder noch weiter voneinander entfernten Projektionen (bzw. Nachbarteilbildern) realisiert wird. Mit anderen Worten, es ist auch eine Überlappung von projizierten bzw. dargestellten Teilen des FOV möglich, die durch nicht direkt benachbarte Projektionsoptiken 125 (bzw." Lenslets") hervorgerufen werden.

Es wird darauf hingewiesen, dass die gegenseitige flächenmäßige Überlappung im Wesentlichen dem Parameter σ in der erfindungsgemäßen Gleichung 6 entspricht, welche noch anhand der Fig. 6a und 6b beispielhaft hergeleitet wird. Hierbei beschreibt σ = 0 den Fall, dass keine Überlappung vorliegt, während σ = 1 den Fall beschreibt, dass eine vollständige Überlappung vorliegt.

Bei Ausführungsbeispielen ist insbesondere die durch die Wahl der Brennweiten f der Mikrolinsen und F der Feldlinse eindeutig bestimmte Überlappung der einzelnen Bildinhalte gemäß der erfindungsgemäßen Gleichung 6 vorteilhaft.

Bei Ausführungsbeispielen gemäß Fig. 1a und 1b kann die Projektionsoptikanordnung 120 ausgelegt sein, um die Projektionen 135 der Teilbilder in der Bildebene 140 zu dem Gesamtbild 150 so zu überlagern, dass eine zentrale Tendenz einer Verteilung der gegenseitigen flächenmäßigen Überlappung 139 der Projektionen der Paare 137 zwischen 0,2 und 0,8 liegt. Die zentrale Tendenz der Verteilung der gegenseitigen flächenmäßigen Überlappung kann beispielsweise einen Wert von 0,5 haben. Typischerweise ermöglicht dieser Wert eine hohe Bildqualität für die Anzeige des Gesamtbildes in der Bildebene.

Bei Ausführungsbeispielen gemäß Fig. 1a und 1b sind Projektionen 135, die sich in der Bildebene 140 überlappen, auch in den Projektionsoptiken 125 zueinander benachbart. Mit anderen Worten, die in Fig. 1b gezeigten Projektionen der Paare 137, die die gegenseitige flächenmäßige Überlappung 139 bilden, sind zwei zueinander benachbarten Projektionsoptiken 125 der in Fig. 1a gezeigten Projektionsoptikanordnung 120 zugeordnet.

Bei Ausführungsbeispielen sind die Projektionsoptiken 125 jeweils einem Teilbereich 115 des Bildgebers 110 zugeordnet (siehe Fig. 1a). Hierbei ist ein Mittenabstand 127 der Projektionsoptiken 125 gleich einem Mittenabstand 117 der den Projektionsoptiken 125 zugeordneten Teilbereichen 115 des Bildgebers 110. Durch die Verwendung eines gleichen Mittenabstands der Projektionsoptiken und der zugeordneten Teilbereiche können einzelne Teilbilder, die von den zugeordneten Teilbereichen 115 des Bildgebers 110 geliefert werden, nach Unendlich abgebildet werden. Hierbei kann ein Abstand der zweidimensionalen Verteilung 122 der Projektionsoptiken 125 von der zweidimensionalen Verteilung von Teilbereichen 115 des Bildgebers 110 beispielsweise der resultierenden Brennweite $F_{res}$ aus der Addition der Brechkraft der Projektionsoptiken 125 mit Brennweite f und der Brechkraft der Feldlinse 130 mit der Brennweite F entsprechen.

Bei Ausführungsbeispielen gemäß Fig. 1a und 1b weist die Projektionsoptikanordnung 120 ferner eine Feldlinse 130 auf, die in Projektionsrichtung 111 der zweidimensionalen Verteilung 122 der Projektionsoptiken 125 nachgeschaltet ist, um die Projektionen 135 der Teilbilder in eine Pupille 103 eines Benutzers des Projektionsdisplays 100 zu lenken. Somit kann die Bildebene 140 eine virtuelle Bildebene sein, zwischen der und der Feldlinse 130 der Bildgeber 110 und die zweidimensionale Verteilung 122 der Projektionsoptiken 125 angeordnet sind. In Fig. 1a ist ein Auge 105 des Benutzers schematisch dargestellt.

Wie in Fig. 1a beispielhaft gezeigt, kann die Feldlinse 130 ausgelegt sein, um Winkel 102 von optischen Kanälen bezüglich einer Richtung einer optischen Achse 101 der Projektionsoptikanordnung 120 so zu ändern, dass die optischen Kanäle durch die Pupille 103 in das Auge 105 des Benutzers verlaufen. Vorzugsweise befindet sich der Brennpunkt der Feldlinse dabei in der Nähe des Drehpunkts des Augapfels. Hierbei entsprechen die optischen Kanäle jeweils Strahlengängen durch einzelne Projektionsoptiken 125 in Projektionsrichtung 111. Durch die Verwendung der mehreren optischen Kanäle für die Projektionen der Teilbilder auf die Bildebene kann im Wesentlichen eine Mehrkanalprojektion erreicht werden.

Die in Fig. 1a gezeigte Feldlinse 130 kann beispielsweise eine Fresnellinse sein. Typischerweise ist eine Fresnellinse vergleichsweise dünn. Durch die Verwendung der Fresnellinse als Feldlinse kann somit die Baulänge des Projektionsdisplays weiter verkürzt werden.

In Fig. 1a ist somit eine Prinzipskizze des Optikschemas des Projektionsdisplays 100 beispielhaft dargestellt. Der prinzipielle Aufbau des in Fig. 1a gezeigten Ausführungsbeispiels lässt sich folgendermaßen zusammenfassen. Auf dem Bildgeber 110 bzw. Mikroimager werden in den Teilbereichen 115 jeweils Teilbilder des gesamten zu übertragenden Bildinhalts als Array (zweidimensionales Raster) dargestellt. Jedes dieser Teilbilder wird durch eine zugeordnete Projektionsoptik 125 (z.B. Mikrolinse) der zweidimensionalen Verteilung 122 (Linsenarray) abgebildet. Die in Projektionsrichtung 111 nachgeschaltete bzw. nachfolgende Feldlinse 130 bildet alle Teilbilder überlagert in das Auge 105 des Beobachters ab. Durch diese Anordnung gemäß Fig. 1a entsteht für den Benutzer bzw. Betrachter ein zusammenhängendes, virtuelles Gesamtbild in der Bildebene 140.

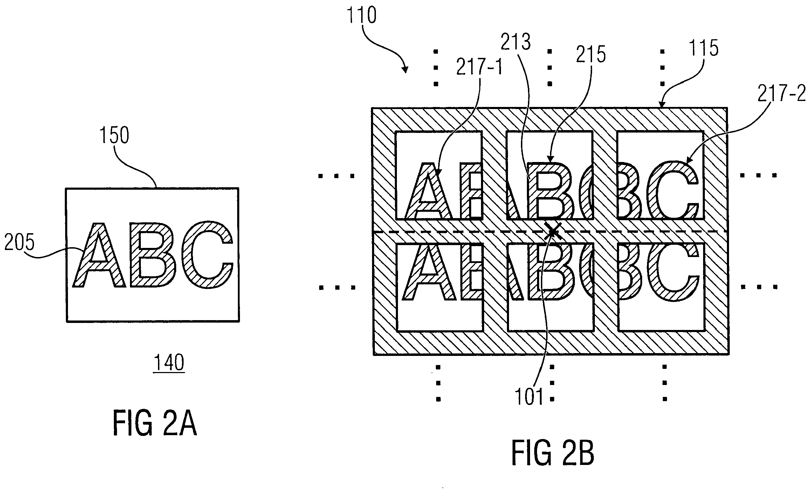

Fig. 2a zeigt eine schematische Darstellung zur Veranschaulichung eines erfindungsgemäßen Gesamtbildes in der Bildebene. In Fig. 2a ist ein projiziertes, virtuelles Gesamtbild 150 beispielhaft dargestellt. Das projizierte, virtuelle Gesamtbild 150 von Fig. 2a liegt in der Bildebene 140 des in Fig. 1a gezeigten Projektionsdisplays 100. Das in der Bildebene 140 liegende Gesamtbild 150 umfasst einen Bildinhalt 205. Beispielsweise stellt der Bildinhalt 205 des Gesamtbilds 150 die Symbole "ABC" (vollständiger Bildinhalt) dar.

Fig. 2b zeigt eine schematische Darstellung zur Veranschaulichung von Teilbildern in einer zweidimensionalen Verteilung von Teilbereichen eines Bildgebers gemäß einem Ausführungsbeispiel der vorliegenden Erfindung. In Fig.

2b sind Teilbilder 215 auf dem Bildgeber 110 bzw. Mikrodisplay beispielhaft dargestellt. Wie in Fig. 2b gezeigt, werden die Teilbilder 215 von dem Bildgeber 110 in einer zweidimensionalen Verteilung von Teilbereichen 115 des Bildgebers 110 dargestellt. Die in der zweidimensionalen Verteilung von Teilbereichen 115 des Bildgebers 110 bereitgestellten Teilbilder 215 stellen Teile des in Fig. 2a gezeigten Gesamtbildes 150 mit dem Bildinhalt 205 dar. Im Übrigen sind die in Fig. 1a gezeigten Projektionsoptiken 125 jeweils den in Fig. 2b gezeigten Teilbereichen 115 des Bildgebers 110 zugeordnet. Ferner ist in der schematischen Darstellung von Fig. 2 b die optische Achse 101 der Projektionsoptikanordnung 120 gezeigt. Die in Fig. 2b gezeigte optische Achse 101 verläuft im Wesentlichen durch ein Zentrum der zweidimensionalen Verteilung von Teilbereichen 115 des Bildgebers 110.

Bei dem in Fig. 2b gezeigten Ausführungsbeispiel ist der Bildgeber 110 ausgelegt, um mit einem größer werdenden Abstand von der optischen Achse 101 der Projektionsoptikanordnung 120 in den den Projektionsoptiken 125 zugeordneten Teilbereichen 115 des Bildgebers 110 die Teilbilder 215 so darzustellen, dass dieselben zunehmend dezentrierte Teile eines anzuzeigenden Gesamtbildes sind, das dem Bildgeber 110 vorgegeben wird. Das dem Bildgeber 110 vorgegebene anzuzeigende Gesamtbild entspricht im Wesentlichen dem projizierten, virtuellen Gesamtbild 150 mit dem Bildinhalt 205 in der Bildebene 140.

Bei Ausführungsbeispielen ist die optische Achse 101 dadurch definiert, dass sie im Wesentlichen durch ein Zentrum der zweidimensionalen Verteilung von Teilbereichen 115 des Bildgebers 110 verläuft.

In Fig. 2b sind Teilbilder 217-1, 217-2, die in Teilbereichen des Bildgebers 110 mit einem größeren Abstand von der optischen Achse 101 dargestellt werden, im Vergleich zu einem Teilbild 213, das in einem Teilbereich des Bildgebers 110 dargestellt wird, der den geringsten Abstand von der optischen Achse 101 hat, dezentriertere Teile des dem Bildgeber 110 vorgegebenen anzuzeigenden Gesamtbildes. Beispielsweise stellt das Teilbild 213 einen relativ zentralen Teil (z.B. das Symbol "B") für den Bildinhalt des projizierten Gesamtbildes 150 dar, während die Teilbilder 217-1, 217-2 dezentriertere Teile (z.B. die Symbole "A" bzw. "C") für den Bildinhalt 205 des projizierten Gesamtbildes 150 darstellen. Durch die Mehrkanalprojektion über die mehreren optischen Kanäle können die Teilbilder 215 bzw. die zunehmend dezentrierten Teile des dem Bildgeber 110 vorgegebenen anzuzeigenden Gesamtbildes in der Bildebene 140 zu dem Gesamtbild 150 überlagert werden. In der Bildebene 140 entsteht somit das projizierte, virtuelle Gesamtbild 150 mit dem vollständigen Bildinhalt (z.B. "ABC").

Fig. 3 zeigt eine schematische Darstellung zur Veranschaulichung von Teilbildern in einer zweidimensionalen Verteilung von Teilbereichen eines Bildgebers gemäß einem Ausführungsbeispiel der vorliegenden Erfindung. In Fig. 3 ist ein kontinuierlicher Randabfall der Bildhelligkeit der Teilbilder auf dem Bildgeber zur Unterdrückung von Artefakten im projizierten, virtuellen Gesamtbild beispielhaft dargestellt. Bei dem Ausführungsbeispiel von Fig. 3 ist wiederum der Bildgeber 110 gezeigt, auf dem die Teilbilder 215 in der zweidimensionalen Verteilung von Teilbereichen 115 des Bildgebers 110 dargestellt werden. Die in Fig. 3 gezeigten Teilbilder 215 können beispielsweise zunehmend dezentrierte Teile eines anzuzeigenden Gesamtbildes sein, das dem Bildgeber 110 vorgegeben wird, wie es anhand des Ausführungsbeispiels von Fig. 2b erläutert wurde.

Bei dem Ausführungsbeispiel gemäß Fig. 3 kann der Bildgeber 110 ausgelegt sein, um jedes der Teilbilder 215 mit einer Bildhelligkeit darzustellen, die kontinuierlich zum Rand 218 des Teilbildes 215 hin abfällt. Dadurch können Artefakte in einem Überlappungsbereich der Projektionen in der Bildebene unterdrückt oder vermieden werden.

Beispielsweise kann die Bildhelligkeit des jeweiligen Teilbildes auf dem Bildgeber 110 so eingestellt sein, dass die Bildhelligkeit in einem Mittenbereich des Teilbildes 215 höher ist als in einem den Mittenbereich umgebenden Randbereich (Rand 218). Gleichzeitig kann die Bildhelligkeit so eingestellt sein, dass sie von einem maximalen zu einem minimalen Wert monoton fällt. Dies beschreibt einen beispielhaften kontinuierlichen Randabfall der Bildhelligkeit. Bei dem Ausführungsbeispiel von Fig. 3 entspricht der Überlappungsbereich, in dem die Artefakte durch die Verwendung des beispielhaften kontinuierlichen Randabfalls der Bildhelligkeit unterdrückt oder vermieden werden, der in Fig. 1b gezeigten gegenseitigen flächenmäßigen Überlappung 139 der Projektionen 135 der Teilbilder 135 in der Bildebene 140.

Mit anderen Worten, bei dem in Fig. 3 gezeigten Ausführungsbeispiel kann der Bildgeber so ausgelegt sein, dass die Bildhelligkeit an Berandungen der Teilbilder auf dem Bildgeber kontinuierlich abfällt, um Helligkeitssprünge im überlagerten Gesamtbild zu unterdrücken.

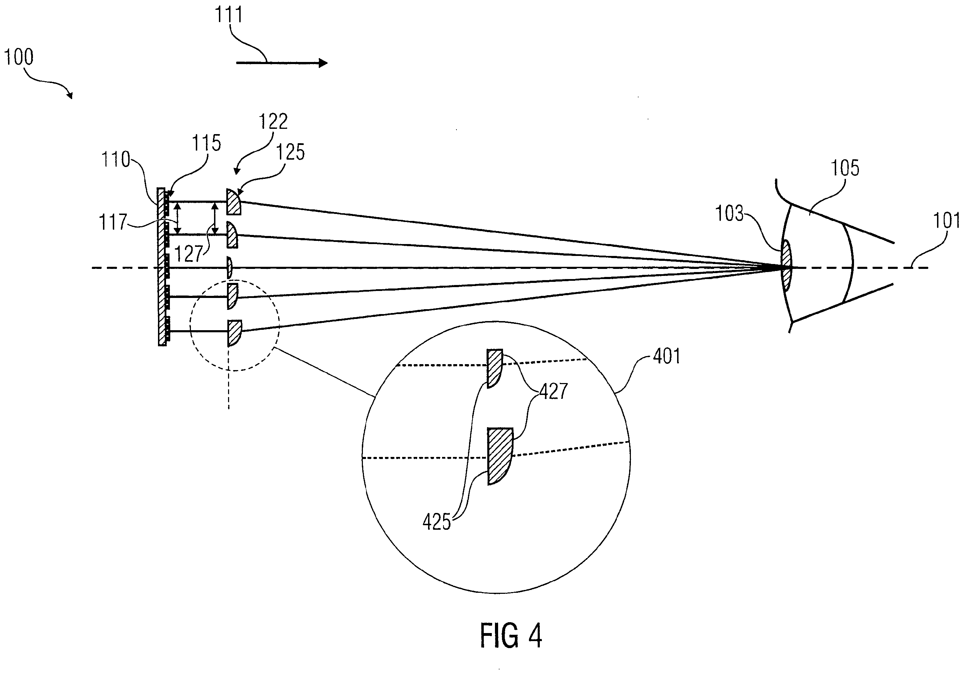

Fig. 4 zeigt eine Seitenansicht einer zweidimensionalen Verteilung von Projektionsoptiken gemäß einem Ausführungsbeispiel der vorliegenden Erfindung. In der Seitenansicht von Fig. 4 sind der Bildgeber 110 mit der zweidimensionalen Verteilung von Teilbereichen 115 und die zweidimensionale Verteilung 122 von Projektionsoptiken 125 des Projektionsdisplays 100 gezeigt. Bei dem in Fig. 4 gezeigten Ausführungsbeispiel sind die Projektionsoptiken 125 jeweils einem Teilbereich 115 des Bildgebers 110 zugeordnet. Ähnlich zu dem Ausführungsbeispiel gemäß Fig. 1a ist bei dem in Fig. 4 gezeigten Ausführungsbeispiel ein Mittenabstand 127 der Projektionsoptiken 125 gleich einem Mittenabstand 117 der den Projektionsoptiken 125 zugeordneten Teilbereichen 115 des Bildgebers 110.

Bei Ausführungsbeispielen weist die zweidimensionale Verteilung 122 der Projektionsoptiken 125 eine Mehrzahl von Linsensegmenten 425 auf, die bezüglich ihrer Apertur unterschiedlich dezentriert sind. Hierbei ist die Mehrzahl der Linsensegmente 425 ausgelegt, um die Projektionen der Teilbilder in die Pupille 103 des Benutzers des Projektionsdisplays 100 zu lenken, wie es in Fig. 4 beispielhaft dargestellt ist. Durch die Verwendung der mehreren unterschied-

lich dezentrierten Linsensegmente 425 können die Projektionen der Teilbilder, die von den Teilbereichen 115 des Bildgebers 110 geliefert werden, direkt in die Pupille 103 des Benutzers gelenkt werden, ohne dass dabei eine in Projektionsrichtung 111 nachgeschaltete Feldlinse (z.B. Feldlinse 130 in Fig. 1a) benötigt wird. Die Funktion solch einer nachgeschalteten Feldlinse kann somit durch die Gesamtheit der unterschiedlich dezentrierten Linsensegmente 425 bereitgestellt werden.

Im Kreis 401 sind die bezüglich ihrer Apertur unterschiedlich dezentrierten Linsensegmente 425 vergrößert dargestellt. Die im Kreis 401 vergrößert dargestellten Linsensegmente 425 haben Linsenscheitel 427, die zur Apertur des jeweiligen Linsensegments 425 eine unterschiedliche Dezentrierung aufweisen. Durch das Vorsehen der unterschiedlichen Dezentrierung der Linsenscheitel 427 kann allein mit der Mehrzahl der Linsensegmente 425 im Wesentlichen die gleiche Wirkung wie mit der in Fig. 1a gezeigten zweidimensionalen Verteilung 122 der Projektionsoptiken 125 zusammen mit der in Projektionsrichtung 111 nachgeschalteten Feldlinse 130 erzielt werden.

Mit anderen Worten, bei dem in Fig. 4 gezeigten Ausführungsbeispiel kann durch die Verwendung eines Linsenarrays mit Lenslets, die aus unterschiedlich dezentrierten Linsensegmenten bestehen, die optische Funktion einer Feldlinse in das Linsenarray integriert werden. Somit wird eine separate Feldlinse nicht mehr benötigt.

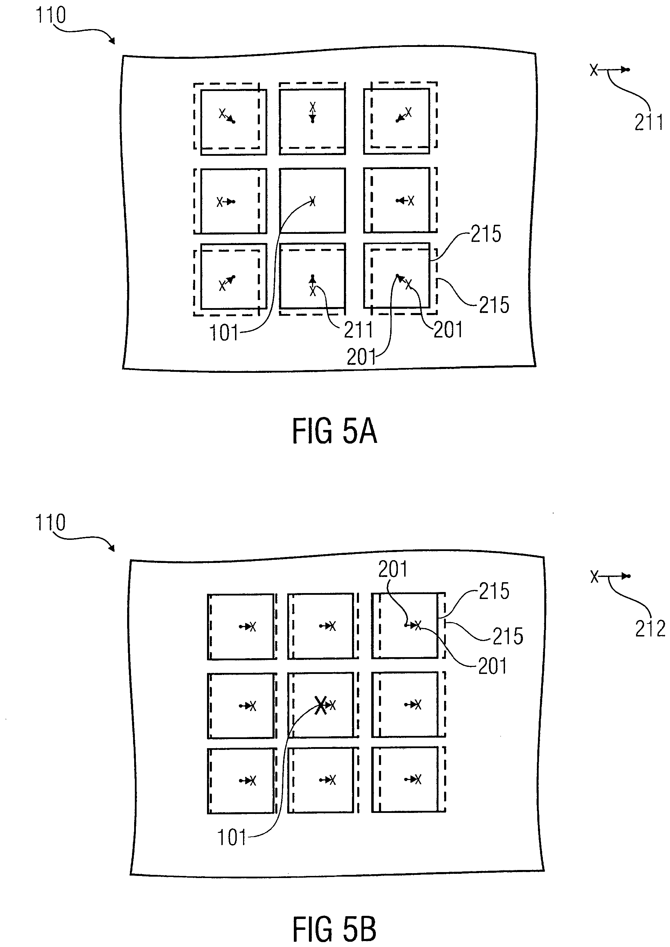

Fig. 5a und 5b zeigen Draufsichten auf Bildgeber zur Darstellung von Verschiebungen von Teilbildern. In Fig. 5a ist der Bildgeber 110 ausgelegt, um Abstände zwischen Zentren 201 der Teilbilder 215 zu vergrößern oder zu verkleinern, um eine Projektionsdistanz einzustellen. In Fig. 5a sind die Teilbilder 215, die auf dem Bildgeber 110 dargestellt werden, in zwei unterschiedlichen Einstellungen gezeigt. Ferner ist die optische Achse 101 der Projektionsoptikanordnung 120, bezüglich derer die Teilbilder 215 dargestellt sind, in Fig. 5a gezeigt. Die zwei unterschiedlichen Einstellungen der Teilbilder 215 bezüglich der optischen Achse 101 auf dem Bildgeber 110 entsprechen im Wesentlichen zwei unterschiedlichen Projektionsdistanzen für das projizierte, virtuelle Gesamtbild in der Bildebene. In der ersten Einstellung sind die Teilbilder 215 mit gestrichelten Linien dargestellt, während die Teilbilder 215 in der zweiten Einstellung mit durchgezogenen Linien dargestellt sind. Ferner sind die Zentren 201 der Teilbilder 215 in der ersten Einstellung durch Kreuze dargestellt, während sie in der zweiten Einstellung durch Punkte dargestellt sind.

Beim Umschalten zwischen der ersten und der zweiten Einstellung des Bildgebers 110 können die Zentren 201 der Teilbilder 215 beispielsweise radial symmetrisch bezüglich der optischen Achse 101 verschoben werden (Verschiebungsvektoren 211). Durch eine radiale, symmetrische Verschiebung der Zentren 201 der Teilbilder 215 bezüglich der optischen Achse 101 ändern sich die Abstände zwischen den Zentren 201 der Teilbilder 215 in den jeweiligen Einstellungen. Die Abstände zwischen den Zentren 201 der Teilbilder 215 können beispielsweise durch eine Verschiebung entlang der Verschiebungsvektoren 211 von der ersten Einstellung zu der zweiten Einstellung vergrößert oder verkleinert werden. Dadurch wird es ermöglicht, die Lage des projizierten virtuellen Gesamtbildes einzustellen bzw. die Projektionsdistanz zu vergrößern oder zu verkleinern.

Gemäß Fig. 5a können somit durch eine softwaregesteuerte Änderung der Abstände der Teilbilder auf dem Bildgeber zueinander unterschiedliche Abstände des virtuellen Bildes zum Betrachter zur Kompensation eventueller Fehlsichtigkeit eingestellt werden.

Bei dem in Fig. 5b gezeigten Ausführungsbeispiel gemäß der vorliegenden Erfindung sind ähnlich wie in Fig. 5a die Teilbilder 215 mit ihren Zentren 201 für zwei verschiedene Einstellungen des Bildgebers 110 gezeigt. In der ersten Einstellung sind die Teilbilder 215 mit durchgezogenen Linien und ihre Zentren 201 mit Punkten dargestellt, während die Teilbilder 215 in der zweiten Einstellung mit gestrichelten Linien und ihre Zentren 201 mit Kreuzen dargestellt sind. Ferner ist wiederum die optische Achse 101 der Projektionsoptikanordnung 120 gezeigt.

Gemäß Fig. 5b ist der Bildgeber 110 ausgelegt, um alle Teilbilder 215 gleichmäßig in Richtung einer lateralen Ausdehnung der zweidimensionalen Verteilung der Teilbereiche des Bildgebers 110 zu verschieben (Richtung 212 der Verschiebung bzw. Verschiebungsvektoren 212). Hierbei ist die gleichmäßige Verschiebung der Teilbilder 215 (bzw. die Verschiebung der Zentren 201 aller Teilbilder 215 in Richtung der Verschiebungsvektoren 212 um den gleichen Betrag) abhängig von einer gemessenen Blickrichtung eines Augapfels eines Benutzers bezüglich der optischen Achse 101 der Projektionsoptikanordnung 120 einstellbar. Durch die gleichmäßige Verschiebung der Teilbilder 215 in Abhängigkeit von der gemessenen Blickrichtung des Augapfels des Benutzers kann ein Schielen des Benutzers bezüglich der optischen Achse 101 der Projektionsoptikanordnung 120 kompensiert werden. Dies ermöglicht es wiederum, dass die Wahrnehmung von Geisterbildern unterdrückt oder vermieden wird, wodurch die Bildqualität der Mehrkanalprojektion weiter erhöht werden kann.

Gemäß Fig. 5b können somit durch eine softwaregesteuerte, gleichmäßige Verschiebung der Teilbilder auf dem Bildgeber unterschiedliche Schielwinkel und somit auch Dezentrierungen des Auges des Betrachters zur optischen Achse des Projektionsdisplays kompensiert werden.

Ferner wird gemäß Fig. 5b die Lage des Augapfels relativ zur optischen Achse des Projektionsdisplays durch einen "Eye-tracking"-Sensor bestimmt. Aus der von dem Sensor gelieferten Messgröße wird ein Sollwert für die Dezentrierung bzw. gleichmäßige Verschiebung der Teilbilder auf dem Bildgeber (Imager) abgeleitet.

Bei Ausführungsbeispielen weist die zweidimensionale Verteilung 122 der Projektionsoptiken 125 eine Mehrzahl von plankonvexen oder bikonvexen Projektionslinsen auf. In Fig. 1a sind die Projektionsoptiken 125 mit einer Mehrzahl von bikonvexen Projektionslinsen beispielhaft dargestellt.

Bei Ausführungsbeispielen weist die Projektionsoptikanordnung 120 eine Mehrzahl von zweidimensionalen Verteilungen von Projektionsoptiken (nicht gezeigt) auf, die in Projektionsrichtung 111 übereinander gestapelt sind. Hierbei kann die Mehrzahl der zweidimensionalen Verteilungen der Projektionsoptiken ausgelegt sein, um Aberrationen der Projektionsoptikanordnung 120 zu korrigieren. Durch das Bereitstellen der Mehrzahl (Stapel) der zweidimensionalen Verteilungen der Projektionsoptiken kann eine Korrektur von Abbildungsfehlern bei der Projektion durch die einzelnen Projektionsoptiken erreicht werden.

Bei Ausführungsbeispielen ist der Bildgeber 110 ein transmittiver oder ein reflektiver Bildgeber.

Fig. 6a und 6b zeigen schematische Darstellungen von einem Strahlengang und einer Zerlegung des Gesichtsfelds bzw. des FOV zur Herleitung einer erfindungsgemäßen Gleichung für eine darstellbare Gesamtpixelzahl. In Fig. 6a ist ein Strahlengang bei einer Abbildung nach Unendlich beispielhaft dargestellt. Zur Verdeutlichung des Strahlengangs wird im Folgenden beispielhaft der Fall einer virtuellen Abbildung nach Unendlich unter Vernachlässigung eines Abstandes zwischen der zweidimensionalen Verteilung 122 von Projektionsoptiken 125 (Linsenarray) und der Feldlinse 130 betrachtet. Das Display bzw. der Bildgeber 110 befindet sich dabei beispielsweise in der Brennebene der aus den Einzellenslets (bzw. den einzelnen Projektionsoptiken 125) des Arrays mit der Brennweite f und der Feldlinse 130 mit Brennweite F bestehenden Systems. Ferner befindet sich das Auge 105 des Beobachters beispielsweise in der Brennebene der Feldlinse 130 im Abstand F.

Den von einem Lenslet des Arrays übertragenen Teil des Gesichtsfelds $FOV_{local}$ erhält man in paraxialer Näherung für die Projektion eines virtuellen Bildes im Unendlichen aus dem Quotient der Ausdehnung des Teilbildes d und der resultierenden Gesamtbrennweite $F_{res} = f * F/(f+F)$. Setzt man weiter den linearen Füllfaktor der Teilbilder auf dem Imager (Bildgeber) mit $\eta = d/a$, wobei a die in Fig. 6a gezeigte Ausdehnung des Lenslets ist, und die Blendenzahl eines Lenslets $f/\# = f/a$ ein, erhält man

$$FOV_{local} = \frac{d}{F_{res}} = d\,\frac{F+f}{F f} = \eta\,\frac{F+f}{F\,f\,/\#} \qquad (3)$$

Die Feldlinse erzeugt eine globale Komponente des Gesichtsfeldes

$$FOV_{global} = \frac{D-a}{F} \qquad (4)$$

wobei D eine gesamte Ausdehnung der mehreren Teilbilder 215 von Fig. 6a ist.

Das resultierende Gesichtfeld erhält man aus der Summation beider Komponenten

$$FOV = FOV_{global} + FOV_{local} = \frac{D\,f\,/\# - f + \eta(F+f)}{F\,f\,/\#} \qquad (5)$$

Um einen möglichst homogenen Anschluss zwischen benachbarten projizierten Teilbildern (bzw. zwischen den Projektionen 135 der Teilbilder in der Bildebene 140) zu erreichen, ist eine teilweise Überlappung der jeweils projizierten Gesichtswinkel (bzw. der Projektionen 135 der Teilbilder) vorteilhaft. Die lineare Überlappung der Projektionen 135 der Teilbilder in der Bildebene 140 berechnet sich zu

$$\sigma = \frac{FOV_{local} - \Delta FOV}{FOV_{local}} = \frac{FOV_{local} - a/F}{FOV_{local}} = 1 - \frac{f}{\eta\,(F+f)} \qquad (6)$$

Einem präzisen Anschluss benachbarter Teilbilder entspricht $\sigma = 0$ (d.h. keine Überlappung), während das entgegengesetzte Extrem einer vollständigen Überlappung, die den Fall einer vielfachen Projektion bzw. die Mehrkanalprojektion identischer Teilbilder beschreibt, $\sigma = 1$ entspricht.

Schätzt man die Zahl der mit diesem Optikschema in einer Dimension darstellbaren Pixelzahlen, so ergeben sich die folgenden Zusammenhänge. Die Pixelzahl eines Kanals berechnet sich aus dem Pixelpitch (bzw. dem Mittenabstand der Pixel) des Imagers p und der Teilbildgröße d zu

$$n = \frac{d}{p} = \eta\,\frac{a}{p} = \eta\,\frac{f}{p\,f\,/\#} \qquad (7)$$

Die Gesamtzahl der in einer Dimension dargestellten Pixel erhält man daraus zu

$$N = n\,\frac{FOV}{FOV_{local}} = \frac{f}{p\,f\,/\#}\,\frac{D\,f\,/\# - f + \eta(F + f)}{F + f} \qquad (8)$$

Die Auswertung der obigen Gleichung zeigt, dass gegenüber der Pixelanzahl des Imagers D/p nur eine deutlich geringere Pixelzahl tatsächlich darstellbar ist. Es wurde deshalb ein Kompromiss zwischen der Forderung nach einer hohen Pixelzahl und der oben beschriebenen Forderung nach möglichst großer Überlappung benachbarter projizierter Teilbilder zur Erreichung eines guten Bildanschlusses gefunden. Überlappungen von $\sigma$ = 1/2 ... 3/4 ermöglichen einen guten Kompromiss zwischen beiden Forderungen. Fig. 2b zeigt die Anordnung der Teilbilder 215 auf dem Bildgeber 110 bzw. Mikroimager für den beispielhaften Spezialfall $\sigma$ = 0,5 und einen beispielhaften Flächenfüllfaktor der Teilbilder 215 von $\eta$ = 50 %.

Für achsennahe Teile des FOV entspricht die eye-motion-box des Projektors der Höhe, die ein Strahl mit einem Einfallswinkel gleich dem lokalen FOV eines Arrayelements auf der Feldlinse haben muss, um durch diese zu einem achsenparallelen Strahl gebrochen zu werden.

$$EMB = F\,FOV_{local} = \eta\,\frac{F + f}{f\,/\#} = \frac{a}{1 - \sigma} \qquad (9)$$

Diese Gleichung gilt allerdings nur solange die eye-motion-box nicht die Gesamtausdehnung D der Teilbilder 215 überschreitet. Ist das bei großer Überlappung der lokalen $FOV_{lo\text{-}cal}$ $\sigma$ nicht mehr gegeben, entspricht die Größe der EMB dann D. In jedem Fall ist die EMB größer als die Apertur eines einzelnen Lenslets.

Für achsenferne Teile des FOV kann sich die Größe der eye-motion-box verringern, da weniger Lenslets an der Abbildung beteiligt sein können. Die Duktion des Augapfels beim Fixieren dieser achsenfernen Teile des FOV bewirkt eine Dezentrierung der Iris. Befindet sich der Brennpunkt der Feldlinse hinter der Iris (z.B. im Drehpunkt des Auges), entspricht die Orientierung dieser Dezentrierung der Lage der Strahlenbündel, die von den Lenslets ausgehen, die genau diese Teile des FOV projizieren. Dieser Umstand gleicht die Vernngerung der Größe der EMB für achsenferne Teile des FOV zumindest teilweise aus.

Bei Ausführungsbeispielen kann die beschriebene Anordnung vorteilhaft mit einem LEDhinterleuchteten, transmittiven LCD-Mikroimager oder einem selbstleuchtenden OLED-Mikrodisplay oder alternativ mit einem reflektiven LCoS- oder einem DLP-("Digital Light Processing") Kippspiegelarray realisiert werden.

Bei Ausführungsbeispielen können ein plankonvexes oder bikonvexes Linsenarray 122 mit typischen Linsen-Pitches (Mittenabständen der Projektionsoptiken) im Bereich von einem Millimeter und eine plankonvexe oder bikonvexe Feldlinse 130 als Abbildungsoptik dienen bzw. von der Projektionsoptikanordnung 120 umfasst sein. Die Brennweite F der Feldlinse 130 kann dabei zweckmäßig im Bereich von 20 ... 40 mm gewählt werden, um einen hinreichenden Abstand zum Auge des Betrachters (Eye Clearance, EC) zu erzielen. Der Abstand der Optik zum Auge kann beispielsweise so gewählt werden, dass die Fokalebene der Feldlinse 130, in der sich Teilbündel der einzelnen Lenslets (bzw. die Strahlengänge durch die Projektionsoptiken 125) treffen, im Bereich zwischen der Hornhaut und dem Drehpunkt des Augapfels des Benutzers liegt.

Um eine verbesserte Abberationskorrektur des Linsenarrays 122 zu erreichen, ist der Ersatz des einfachen plan- oder bikonvexen Linsenarrays 122 durch mehrere, gestapelte Linsenarrays sinnvoll, wie es im Vorhergehenden beschrieben wurde.

Ferner kann bei Ausführungsbeispielen eine platzsparende Realisierung der Optik bzw. eine verkürzte Baulänge des Projektionsdisplays 100 durch den Einsatz einer Fresnellinse als Feldlinse 130 ermöglicht werden.

Um einen möglichst guten Anschluss der einzelnen projizierten Teilbilder in der Bildebene zu erreichen, kann die teilweise Überlappung der Gesichtsfelder bzw. der Projektionen benachbarter Teilbilder realisiert werden, wie es anhand des in Fig. 1a und 1b gezeigten Ausführungsbeispiels erläutert wurde. Damit eine Einschränkung der mit dem Projektionsdisplay 100 darstellbaren Pixelzahl und außerdem eine Verringerung der Bildhelligkeit am Rand des in der Bildebene liegenden Gesamtbildes 150 vermieden wird, können mögliche Artefakte der Übergänge zwischen den Projektionen der Teilbilder im projizierten virtuellen Gesamtbild 150 durch den kontinuierlichen Abfall der Bildhelligkeit am Rand eines jeden Teilbildes auf dem Bildgeber 110 gemildert werden. Dies wurde bereits anhand des in Fig. 3 gezeigten Ausführungsbeispiels verdeutlicht.

In Bezug auf Fig. 5a kann die Lage der virtuellen Bildebene, in der sich die einzelnen projizierten Teilbilder überlagern, durch die Vergrößerung oder Verkleinerung der Abstände zwischen den Zentren 201 der Teilbilder 215 auf dem Mikrodisplay bzw. dem Bildgeber 110 beeinflusst werden. Somit ist eine rein softwaretechnische Anpassung an eine mögliche Fehlsichtigkeit des Beobachters ohne mechanisch bewegte Teile möglich. Beispielsweise kann durch eine Vergrößerung der Abstände der Bildzentren zueinander dabei der Abstand der virtuellen Bildebene vom Betrachter bzw. die Projektionsdistanz vergrößert werden.

Eine Dezentrierung des Auges des Beobachters bezüglich der optischen Achse 101 des Projektionsdisplays 100 kann zur Wahrnehmung von Geisterbildern durch die Betrachtung von Teilbildern des Bildgebers nicht durch die zugeordneten, sondern durch benachbarte Lenslets bzw. Projektionsoptiken führen (Crosstalk, optisches Übersprechen). Durch eine Bildvorverarbeitungssoftware gesteuerte, gleichmäßige seitliche Verschiebung oder Höhenverschiebung aller Teilbilder auf dem Bildgeber ermöglicht, die Kompensation einer solchen Dezentrierung in bestimmten Grenzen zu erreichen (vgl. Ausführungsbeispiel von Fig. 5b). Das Projektionsdisplay ist ferner mit einem Sensor zum Eye-tracking (Augapfelverfolgung) ergänzt, um aus der mit dem Sensor gewonnenen Lageinformation des Augapfels ein Sollsignal für die Bildvorverarbeitungssoftware zur Dezentrierung der Teilbilder abzuleiten.

Bei Ausführungsbeispielen kann eine Vollfarbdarstellung vorzugsweise durch ein zeitsequenzielles Durchschalten der Teilbilder in den Grundfarben RGB erreicht werden. Alternativ können auch RGB-Pixeltripel verwendet werden, die allerdings die für eine gegebene Pixelgröße darstellbare Pixelzahl verringern. Farbquerfehler im virtuellen Bild sind beispielsweise durch eine geeignete Bildvorverarbeitung zur farbabhängigen Vorverzerrung der Grundfarbbilder vorkompensierbar.

Bei Ausführungsbeispielen kann die Vollfarbdarstellung dadurch ermöglicht werden, dass eine farbsequenzielle Darstellung durch Schalten der Farbe der Beleuchtung und entsprechende synchrone Änderung der Bildinhalte für die jeweilige Grundfarbe verwendet wird.

Bei Ausführungsbeispielen können Farbquerfehler der Abbildungsoptik bzw. der Projektionsoptikanordnung durch eine geeignete Anpassung der Bildinhalte mit dem Bildgeber kompensiert werden.

Analog ist auch die Kompensation von Verzeichnungsfehlern, die von den Lenslets des Arrays als auch durch die Wirkung der Feldlinse hervorgerufen werden, durch eine Vorverzerrung der Teilbildinhalte möglich.

Zusammenfassend schaffen Ausführungsbeispiele ein Projektionsdisplay mit einem Mikrodisplay, einer regelmäßigen zweidimensionalen Anordnung (Array) von Projektionsoptiken, die jeweils einen zugeordneten Teilbereich des Bildgebers abbilden und einer Feldlinse zur Überlagerung der Strahlengänge in der Ebene des Betrachters, wobei die Bildinhalte der Teilbereiche des Bildgebers mit dem Abstand des jeweiligen Lenslets zur Arrayachse zunehmend dezentrierte Teile des Gesamtbildes darstellen. Als Projektionsoptikarray kann beispielsweise ein plankonvexes oder bikonvexes Linsenarray benutzt werden. Ferner können als Projektionsoptikarray mehrere gestapelte Linsenarrays zur Erzielung einer besseren Abberationskorrektur eingesetzt werden.

Bei Ausführungsbeispielen können die Inhalte benachbarter Teilbilder auf dem Bildgeber nach der Mehrkanalprojektion in der Bildebene teilweise überlappen.

Bei Ausführungsbeispielen kann ein zweiäugiges System mit unterschiedlichen Bildinhalten links und rechts zur stereoskopischen Darstellung dreidimensionaler Szenen genutzt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachfolgenden Patentansprüche und nicht durch die spezifischen Einzelheiten, die anhand der Beschreibung und der Erläuterung der Ausführungsbeispiele hierin präsentiert wurden, beschränkt sei.

Ausführungsbeispiele der vorliegenden Erfindung schaffen ein optisches Konzept zur Projektion virtueller Bilder mit einem Projektionsdisplay, das einen Bildgeber bzw. ein Mikrodisplay und eine in Augennähe positionierte, miniaturisierte Optik bzw. Projektionsoptikanordnung umfasst. Die Projektionsoptikanordnung umfasst beispielsweise eine zweidimensionale Verteilung von Projektionsoptiken (Linsenarray) und eine Feldlinse, wobei die Projektionsoptiken bzw. Lenslets des Arrays jeweils Teilbereiche des gesamten FOV abbilden. Das erfindungsgemäße Optikschema hat den Vorteil, dass mit diesem die Einschränkung der mit einem bekannten Arrayprojektor gemäß dem Stand der Technik darstellbaren Pixelzahl überwunden werden kann. Gleichzeitig wird mit dem erfindungsgemäßen Optikschema der Vorzug einer geringen Baulänge weiter aufrechterhalten.

Ausführungsbeispiele der vorliegenden Erfindung schaffen eine einfache Optik. Die erfindungsgemäße Optik ist dadurch ausgezeichnet, dass ein sehr kurzes Head-Mounted Display (HMD), eine elektrische Einstellung des Bildabstandes und eine elektrische Kompensierung der Dezentrierung realisiert werden kann.

Die vorliegende Erfindung weist die folgenden Voreile auf. Es wird eine Überlappung des Field of View (FOV) und somit ein besseres Verhältnis (Trade-off) zwischen Pixelzahl und Eye Motion Box (EMB) erreicht. Ferner sind Artefakte des Arrays nicht mehr sichtbar ("Schlüssellochprinzip bzw. -effekt" wie bei der Verwendung eines Teleskops) bzw., es sind nur noch schwache Artefakte der FOV-Segmentierung vorhanden.

Ausführungsbeispiele der vorliegenden Erfindung ermöglichen somit eine elektrische Fokussierung, eine elektrische Kompensation der Dezentrierung sowie eine elektrische Kompensation von Farbquerfehlern.

Das erfindungsgemäße Projektionsdisplay dient beispielsweise zur Darstellung bewegter und statischer virtueller Bilder mit einer in Augennähe positionierten, miniaturisierten Optik, wie sie für Head-Mounted Displays (z.B. Datensichtbrillen) benötigt wird.

**Patentansprüche**

1. Projektionsdisplay (100) zur Projektion virtueller Bilder in einem Head-Mounted-Display, mit folgenden Merkmalen:

   einem Bildgeber (110) zum Darstellen von Teilbildern in einer zweidimensionalen Verteilung von Teilbereichen (115) des Bildgebers (110);
   einer zur Positionierung in Augennähe vorgesehene Projektionsoptikanordnung (120) mit einer zweidimensionalen Verteilung (122) von Projektionsoptiken (125), die konfiguriert ist, um Projektionen (135) der Teilbilder in einer Bildebene (140) zu einem Gesamtbild (150) so zu überlagern, dass paarweise eine gegenseitige flächenmäßige Überlappung (139) der Projektionen (135) der Teilbilder in der Bildebene (140) resultiert, die für alle Paare (137) zwischen 0,1 und 0,8 liegt, wobei eine vollständige Überlappung durch eine 1 und keine durch eine 0 beschrieben wird;
   einem "Eye-tracking"-Sensor;
   wobei das Projektionsdisplay (100) so ausgelegt ist, dass das Gesamtbild (150) ein virtuelles Gesamtbild ist, wobei der Bildgeber (110) ausgelegt ist, um alle Teilbilder (215) gleichmäßig in Richtung (212) einer lateralen Ausdehnung der zweidimensionalen Verteilung der Teilbereiche (115) des Bildgebers (110) zu verschieben, wobei die gleichmäßige Verschiebung der Teilbilder (215) abhängig von einer von dem "Eye-tracking"-Sensor gemessenen Lage eines Augapfels eines Benutzers bezüglich einer optischen Achse (101) der Projektionsoptikanordnung (120) einstellbar ist.

2. Das Projektionsdisplay (100) nach Anspruch 1, wobei die Projektionsoptikanordnung (120) ausgelegt ist, um die Projektionen (135) der Teilbilder in der Bildebene (140) zu dem Gesamtbild (150) so zu überlagern, dass eine zentrale Tendenz einer Verteilung der gegenseitigen flächenmäßigen Überlappung (139) der Projektionen der Paare (137) zwischen 0,2 und 0,8 liegt.

3. Das Projektionsdisplay (100) nach Anspruch 1 oder 2, wobei Projektionen (135), die sich in der Bildebene (140) überlappen, auch in den Projektionsoptiken (125) zueinander benachbart sind.

4. Das Projektionsdisplay (100) nach einem der Ansprüche 1 bis 3, wobei die Projektionsoptiken (125) jeweils einem Teilbereich (115) des Bildgebers (110) zugeordnet sind, wobei ein Mittenabstand (127) der Projektionsoptiken (125) gleich einem Mittenabstand (117) der den Projektionsoptiken (125) zugeordneten Teilbereichen (115) des Bildgebers (110) ist.

5. Das Projektionsdisplay (100) nach einem der Ansprüche 1 bis 4, wobei die Projektionsoptikanordnung (120) ferner eine Feldlinse (130) aufweist, die in Projektionsrichtung (111) der zweidimensionalen Verteilung (122) der Projektionsoptiken (125) nachgeschaltet ist, um die Projektionen (135) der Teilbilder in eine Pupille (103) eines Benutzers des Projektionsdisplays (100) zu lenken, so dass die Bildebene (140) eine virtuelle Bildebene ist, zwischen der und der Feldlinse (130) der Bildgeber (110) und die zweidimensionale Verteilung (122) der Projektionsoptiken (125) angeordnet sind.

6. Das Projektionsdisplay (100) nach Anspruch 5, wobei die Feldlinse (130) eine Fresnellinse ist.

7. Das Projektionsdisplay (100) nach einem der Ansprüche 1 bis 6, wobei die zweidimensionale Verteilung (122) der Projektionsoptiken (125) eine Mehrzahl von plankonvexen oder bikonvexen Projektionslinsen aufweist.

8. Das Projektionsdisplay (100) nach einem der Ansprüche 1 bis 7, wobei die Projektionsoptikanordnung (120) eine Mehrzahl von zweidimensionalen Verteilungen von Projektionsoptiken aufweist, die in Projektionsrichtung (111) übereinander gestapelt sind, wobei die Mehrzahl der zweidimensionalen Verteilungen der Projektionsoptiken ausgelegt ist, um eine Aberration der Projektionsoptikanordnung (120) zu korrigieren.

9. Das Projektionsdisplay (100) nach einem der Ansprüche 1 bis 8, wobei der Bildgeber (110) ausgelegt ist, um jedes der Teilbilder (215) mit einer Bildhelligkeit darzustellen, die kontinuierlich zum Rand (218) des Teilbildes (215) hin abfällt, so dass Artefakte in einem Überlappungsbereich (139) der Projektionen (135) in der Bildebene (140) unterdrückt oder vermieden werden.

**10.** Das Projektionsdisplay (100) nach einem der Ansprüche 1 bis 9, wobei die zweidimensionale Verteilung (122) der Projektionsoptiken (125) eine Mehrzahl von Linsensegmenten (425) aufweist, die bezüglich ihrer Apertur unterschiedlich dezentriert sind, wobei die Mehrzahl der Linsensegmente (425) ausgelegt ist, um die Projektionen der Teilbilder in eine Pupille (103) eines Benutzers des Projektionsdisplays (100) zu lenken.

**11.** Das Projektionsdisplay (100) nach einem der Ansprüche 1 bis 10, wobei der Bildgeber (110) ein transmittiver oder ein reflektiver Bildgeber ist.

**12.** Das Projektionsdisplay (100) nach einem der Ansprüche 1 bis 11, wobei die Projektionsoptiken (125) jeweils Teilbereichen (115) des Bildgebers (110) zugeordnet sind, wobei der Bildgeber (110) ausgelegt ist, um mit einem größer werdenden Abstand von einer optischen Achse (101) der Projektionsoptikanordnung (120) in den den Projektionsoptiken (125) zugeordneten Teilbereichen (115) des Bildgebers (110) Teilbilder (215) darzustellen, die zunehmend dezentrierte Teile eines anzuzeigenden Gesamtbildes sind, das dem Bildgeber (110) vorgegeben wird, wobei die optische Achse (101) im Wesentlichen durch ein Zentrum der zweidimensionalen Verteilung von Teilbereichen (115) des Bildgebers (110) verläuft.

**13.** Das Projektionsdisplay (100) nach einem der Ansprüche 1 bis 12, wobei der Bildgeber (110) ausgelegt ist, um Abstände zwischen Zentren (201) der Teilbilder (215) zu vergrößern oder zu verkleinern, um eine Projektionsdistanz einzustellen, wobei das Projektionsdisplay eine Umschaltbarkeit zwischen zwei Einstellungen des Bildgebers ermöglicht, die mit unterschiedlichen Abständen zwischen Zentren (201) der Teilbilder (215) verbunden sind.

**14.** Verfahren zur Projektion virtueller Bilder in einem Head-Mounted-Display, mit folgenden Schritten:

Darstellen von Teilbildern mit einem Bildgeber (110) in einer zweidimensionalen Verteilung von Teilbereichen (115) des Bildgebers (110);
Überlagern von Projektionen (135) der Teilbilder durch eine in Augennähe positionierte Projektionsoptikanordnung (120) mit einer zweidimensionalen Verteilung (122) von Projektionsoptiken (125) in einer Bildebene (140) zu einem Gesamtbild (150) derart, dass paarweise eine gegenseitige flächenmäßige Überlappung (139) der Projektionen (135) der Teilbilder in der Bildebene (140) resultiert, die für alle Paare (137) zwischen 0,1 und 0,8 liegt, wobei eine vollständige Überlappung durch eine 1 und keine durch eine 0 beschrieben wird;
wobei das Projektionsdisplay (100) so ausgelegt ist, dass das Gesamtbild (150) ein virtuelles Gesamtbild ist, Gleichmäßiges Verschieben aller Teilbilder (215) in Richtung (212) einer lateralen Ausdehnung der zweidimensionalen Verteilung der Teilbereiche (115) des Bildgebers (110) durch den Bildgeber (110), wobei die gleichmäßige Verschiebung der Teilbilder (215) abhängig von einer von einem "Eye-tracking"-Sensor gemessenen Lage eines Augapfels eines Benutzers bezüglich einer optischen Achse (101) der Projektionsoptikanordnung (120) einstellbar ist.

## Claims

**1.** Projection display (100) for projecting virtual images in a head-mounted display comprising:

an imager (110) for displaying sub-images in a two-dimensional distribution of sub-areas (115) of the imager (110);
a projection optics array (120) provided for near-eye-positioning with a two-dimensional distribution (122) of projection optics (125) configured to superimpose projections (135) of sub-images to an overall image (150) in an image plane (140) such that a mutual area overlap (139) of the projections (135) of the sub-images in the image plane (140) in pairs results, which is between 0.1 and 0.8 for all pairs (137); wherein complete overlap corresponds to 1 and no overlap corresponds to 0;
an eye-tracking sensor;
wherein the projection display (100) is implemented such that the overall image (150) is a virtual overall image, wherein the imager (110) is implemented to displace all sub-images (215) evenly in the direction (212) of a lateral extension of the two-dimensional distribution of the sub-areas (115) of the imager (110), wherein the even displacement of the sub-images (215) is adjustable in dependence on a position of an eyeball of a user with respect to an optical axis (101) of the projection optics array (120) measured by an eye-tracking sensor.

**2.** Projection display (100) according to claim 1, wherein the projection optics array (120) is implemented to superimpose projections (135) of the sub-images to the overall image (150) in the image plane (140) such that a central tendency of a distribution of the mutual area overlap (139) of the projections of the pairs (137) is between 0.2 and 0.8.

**3.** Projection display (100) according to claims 1 or 2, wherein projections (135) overlapping in the image plane (140) are also adjacent to one another in the projection optics (125).

**4.** Projection display (100) according to one of claims 1 to 3, wherein the projection optics (125) are each allocated to a sub-area (115) of the imager (110), wherein a pitch (127) of the projection optics (125) is equal to a pitch (117) of the sub-areas (115) of the imager (110) allocated to the projection optics (125).

**5.** Projection display (100) according to one of claims 1 to 4, wherein the projection optics array (120) further comprises a field lens (130) downstream of the two-dimensional distribution (122) of the projection optics (125) in the projection direction (111), in order to direct the projections (135) of the sub-images into a pupil (103) of a user of the projection display (100), such that the image plane (140) is a virtual image plane, wherein the imager (110) and the two-dimensional distribution (122) of the projection optics (125) are arranged between the same and the field lens (130).

**6.** Projection display (100) according to claim 5, wherein the field lens (130) is a Fresnel lens.

**7.** Projection display (100) according to one of claims 1 to 6, wherein the two-dimensional distribution (122) of the projection optics (125) comprises a plurality of plano-convex or biconvex projection lenses.

**8.** Projection display (100) according to one of claims 1 to 7, wherein the projection optics array (120) comprises a plurality of two-dimensional distributions of projection optics stacked above one another in the projection direction (111), wherein the plurality of two-dimensional distributions of projection optics are implemented to correct an aberration of the projection optics array (120).

**9.** Projection display (100) according to one of claims 1 to 8, wherein the imager (110) is implemented to display each of the sub-images (215) with an image brightness which continuously decreases towards the edge (218) of the sub-image (215), so that artefacts in an overlapping area (139) of the projections (135) in the image plane (140) are suppressed or prevented.

**10.** Projection display (100) according to one of claims 1 to 9, wherein the two-dimensional distribution (122) of the projection optics (125) comprises a plurality of lens segments (425) which are differently decentered with respect to their aperture, wherein the plurality of lens segments (425) is implemented to direct the projections of the sub-images into a pupil (103) of a user of the projection display (100).

**11.** Projection display (100) according to one of claims 1 to 10, wherein the imager (110) is a transmissive or a reflective imager.

**12.** Projection display (100) according to one of claims 1 to 11, wherein the projection optics (125) are each allocated to sub-areas (115) of the imager (110), wherein the imager (110) is implemented to display, with increasing distance to an optical axis (101) of the projection optics array (120) in the sub-areas (115) of the imager (110) allocated to the projection optics (125), sub-images (215) which are increasingly decentered parts of an overall image to be displayed which is provided to the imager (110), wherein the optical axis (101) runs essentially through a center of the two-dimensional distribution of sub-areas (115) of the imager (110).

**13.** Projection display (100) according to one of claims 1 to 12, wherein the imager (110) is implemented to increase or decrease distances between centers (201) of the sub-images (215) to adjust a projection distance, wherein the projection display enables a switchability between two settings of the imager connected with different distances between centers (201) of the sub-images (215).

**14.** Method for projecting virtual images in a head-mounted display, comprising:

displaying sub-images with an imager (110) in a two-dimensional distribution of sub-areas (115) of the imager (110);
superimposing projections (135) of the sub-images to an overall image (150) in an image plane (140) by a projection optics array (120) positioned near the eyes with a two-dimensional distribution (122) of projection optics (125) such that a mutual area overlap (139) of the projections (135) of the sub-images in the image plane (140) in pairs results, which is between 0.1 and 0.8 for all pairs (137); wherein complete overlap corresponds to 1 and no overlap corresponds to 0;

wherein the projection display (100) is implemented such that the overall image (150) is a virtual overall image, displacing all sub-images (215) evenly in the direction (212) of a lateral extension of the two-dimensional distribution of the sub-areas (115) of the imager (110) by the imager (110), wherein the even displacement of the sub-images (215) is adjustable in dependence on a position of an eyeball of a user with respect to an optical axis (101) of the projection optics array (120) measured by an eye-tracking sensor.

## Revendications

1. Ecran de projection (100) pour projeter des images virtuelles dans un visiocasque, aux caractéristiques suivantes:

   un générateur d'images (110) destiné à afficher des images partielles selon une distribution bidimensionnelle de zones partielles (115) du générateur d'images (110);
   un aménagement d'optiques de projection (120) prévu pour être positionné à proximité de l'oeil, avec une distribution bidimensionnelle (122) des optiques de projection (125), qui est configuré pour superposer les projections (135) des images partielles dans un plan d'image (140) pour obtenir une image globale (150) de sorte qu'il en résulte, par paire, un chevauchement sur l'ensemble de la surface (139) réciproque des projections (135) des images partielles dans le plan d'image (140) qui est, pour toutes les paires (137), compris entre 0,1 et 0,8, où un chevauchement complet est décrit par un 1 et aucun chevauchement est décrit par un 0;
   un capteur de "suivi de l'oeil";
   dans lequel l'écran de projection (100) est conçu de sorte que l'image globale (150) soit une image globale virtuelle,
   dans lequel le générateur d'images (110) est conçu pour déplacer de manière uniforme toutes les images partielles (215) dans la direction (212) d'une étendue latérale de la distribution bidimensionnelle des zones partielles (115) du générateur d'images (110), dans lequel le déplacement uniforme des images partielles (215) peut être réglé en fonction d'une position du globe oculaire d'un utilisateur mesurée par le capteur de "suivi de l'oeil" par rapport à un axe optique (101) de l'aménagement d'optiques de projection (120).

2. Ecran de projection (100) selon la revendication 1, dans lequel l'aménagement d'optiques de projection (120) est conçu pour superposer les projections (135) des images partielles dans le plan d'image (140) pour obtenir l'image globale (150) de sorte qu'une tendance centrale d'une distribution du chevauchement sur l'ensemble de la surface (139) réciproque des projections des paires (137) soit comprise entre 0,2 et 0,8.

3. Ecran de projection (100) selon la revendication 1 ou 2, dans lequel les projections (135) qui se chevauchent dans le plan d'image (140) sont également adjacentes l'une à l'autre dans les optiques de projection (125).

4. Ecran de projection (100) selon l'une des revendications 1 à 3, dans lequel les optiques de projection (125) sont associées, chacune, à une zone partielle (115) du générateur d'images (110), dans lequel une distance centrale (127) des optiques de projection (125) est égale à une distance centrale (117) des zones partielles (115) du générateur d'images (110) associées aux optiques de projection (125).

5. Ecran de projection (100) selon l'une des revendications 1 à 4, dans lequel l'aménagement d'optiques de projection (120) présente par ailleurs une lentille de champ (130) qui est connectée en aval dans la direction de projection (111) de la distribution bidimensionnelle (122) des optiques de projection (125) pour diriger les projections (135) des images partielles vers une pupille (103) d'un utilisateur de l'écran de projection (100), de sorte que le plan image (140) soit un plan d'image virtuel entre lequel et la lentille de champ (130) sont disposés le générateur d'images (110) et la distribution bidimensionnelle (122) des optiques de projection (125).

6. Ecran de projection (100) selon la revendication 5, dans lequel la lentille de champ (130) est une lentille de Fresnel.

7. Ecran de projection (100) selon l'une des revendications 1 à 6, dans lequel la distribution bidimensionnelle (122) des optiques de projection (125) présente une pluralité de lentilles de projection planes convexes ou biconvexes.

8. Ecran de projection (100) selon l'une des revendications 1 à 7, dans lequel l'aménagement d'optiques de projection (120) présente une pluralité de distributions bidimensionnelles d'optiques de projection qui sont empilées l'une au-dessus de l'autre dans la direction de projection (111), dans lequel la pluralité des distributions bidimensionnelles des optiques de projection est conçue pour corriger une aberration de l'aménagement d'optiques de projection (120).

9. Ecran de projection (100) selon l'une des revendications 1 à 8, dans lequel générateur d'images (110) est conçu pour représenter chacune des images partielles (215) avec une luminosité d'image qui diminue en continu vers le bord (218) de l'image partielle (215), de sorte que les artefacts dans une zone de chevauchement (139) des projections (135) dans le plan d'image (140) soient supprimés ou évités.

10. Ecran de projection (100) selon l'une des revendications 1 à 9, dans lequel la distribution bidimensionnelle (122) des optiques de projection (125) présente une pluralité de segments de lentille (425) qui sont décentrés de manière différente en ce qui concerne leur ouverture, dans lequel la pluralité de segments de lentille (425) est conçue pour diriger les projections des images partielles vers une pupille (103) d'un utilisateur de l'écran de projection (100).

11. Ecran de projection (100) selon l'une des revendications 1 à 10, dans lequel générateur d'images (110) est un générateur d'images transmissif ou un générateur d'images réfléchissant.

12. Ecran de projection (100) selon l'une des revendications 1 à 11, dans lequel les optiques de projection (125) sont associées, chacune, à des zones partielles (115) du générateur d'images (110), dans lequel le générateur d'images (110) est conçu pour représenter, à une distance croissante à partir d'un axe optique (101) de l'aménagement d'optiques de projection (120) dans les zones partielles (115) du générateur d'images (110) associées aux optiques de projection (125), des images partielles (215) qui sont des parties de plus en plus décentrées d'une image globale à afficher qui est indiquée pour le générateur d'images (110), dans lequel l'axe optique (101) passe sensiblement par un centre de la distribution bidimensionnelle des zones partielles (115) du générateur d'images (110).

13. Ecran de projection (100) selon l'une des revendications 1 à 12, dans lequel le générateur d'images (110) est conçu pour augmenter ou diminuer les distances entre les centres (201) des images partielles (215) pour régler une distance de projection, dans lequel l'écran de projection permet une possibilité de commutation entre deux réglages du générateur d'images qui sont liés à des distances différentes entre les centres (201) des images partielles (215).

14. Procédé de projection d'images virtuelles dans un visiocasque, aux étapes suivantes consistant à:

représenter les images partielles par un générateur d'images (110) selon une distribution bidimensionnelle de zones partielles (115) du générateur d'images (110);
superposer les projections (135) des images partielles par un aménagement d'optiques de projection (120) positionné à proximité de l'œil avec une distribution bidimensionnelle (122) des optiques de projection (125) dans un plan d'image (140) pour former une image globale (150) de sorte qu'il en résulte, par paire, un chevauchement sur l'ensemble de la surface (139) réciproque des projections (135) des images partielles dans le plan d'image (140) qui est, pour toutes les paires (137), compris entre 0,1 et 0,8, où un chevauchement complet est décrit par un 1 et aucun chevauchement est décrit par un 0;
dans lequel l'écran de projection (100) est conçu de sorte que l'image globale (150) soit une image globale virtuelle,
déplacer de manière uniforme toutes les images partielles (215) dans la direction (212) d'une étendue latérale de la distribution bidimensionnelle des zones partielles (115) du générateur d'images (110) par le générateur d'images (110), où le déplacement uniforme des images partielles (215) peut être réglé en fonction d'une position du globe oculaire d'un utilisateur mesurée par le capteur de "suivi de l'oeil" par rapport à un axe optique (101) de l'aménagement d'optiques de projection (120).

FIG 1A

EP 2 831 660 B1

FIG 1B

FIG 2A

FIG 2B

FIG 3

FIG 4

FIG 5A

FIG 5B

FIG 6A

FIG 6B

EP 2 831 660 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5499138 A
- US 5561538 A
- US 6816313 B2
- US 2008020473 A1
- WO 2010145784 A1
- US 6611241 B1
- WO 2011157632 A1

**In der Beschreibung aufgeführte Nicht-Patentliteratur**

- **A. TAKAGI ; S. YAMAZAKI ; Y. SAITO ; N. TAN-IGUCHI.** Development of a stereo video see-through HMD for AT systems. *Int. Symp. On Augmented Reality, Munich, Germany,* 05. Oktober 2000
- **ICHIRO KASAI YASUSHI ; YASUSHI TANIJIRI ; TAKESHI ENDO ; HIROAKI UEDA.** A Forgettable Near Eye Display. *Proc. 4th Int. Symp. on Wearable Computers, ISWC 2000, Atlanta*